# EUROPÄISCHE PATENTSCHRIFT

(11) **EP 0 563 940 B1**
(45) Veröffentlichungstag und Bekanntmachung des Hinweises auf die Patenterteilung: **25.11.1998**
(21) Anmeldenummer: 93105372.2
(22) Anmeldetag: 31.03.1993
(51) Int. Cl.: F16D 3/28, F16D 3/62

(54) **Elastisches Kreuzgelenk**
Elastic universal joint
Joint universel élastique

(30) Priorität: 01.04.1992 DE 4210824
(43) Veröffentlichungstag der Anmeldung: 06.10.1993
(73) Patentinhaber: Fiedler, Kurt, 65468 Geinsheim (DE)
(72) Erfinder: Wolf, Franz Josef, W-6483 Bad Soden-Salmünster (DE); Fiedler, Kurt, Dipl.-Ing., W-6097 Geinsheim (DE)
(74) Vertreter: Schaumburg, Thoenes & Thurn

(56) Entgegenhaltungen:
- EP-A- 0 160 599
- DE-A- 2 255 533
- DE-C- 538 043
- DE-C- 540 368
- FR-A- 2 192 651
- FR-A- 2 568 329
- GB-A- 942 495
- GB-A- 1 258 849
- US-A- 1 855 640
- US-A- 2 998 717
- US-A- 3 851 498

## Beschreibung

Die Erfindung betrifft ein Kreuzgelenk nach dem Oberbegriff des Patentanspruchs 1 sowie dessen Verwendung.

Kreuzgelenke nach dem Stand der Technik werden üblicherweise immer dann verwendet, wenn es gilt, zwei drehmomentübertragende Wellen, deren fluchtende Ausrichtung nicht gewährleistet ist oder bei denen bewußt aus konstruktiven Gründen ein mehr oder weniger definierter Beugewinkel zugelassen werden soll, miteinander zu verbinden. Derartige Kreuzgelenke bestehen dabei üblicherweise aus zwei einander axial gegenüberliegenden um 90° gegeneinander versetzten Gabeln, die jeweils ein Ende der zwei gelenkig miteinander zu verbindenden Wellen darstellen. Zwischen diesen Gabeln ist ein Zapfenkreuz angeordnet, das aus zwei um 90° gegeneinander versetzten Zapfenpaaren besteht, wobei diese Zapfenpaare einstückig und damit mechanisch starr miteinander verbunden sind. Die einander gegenüberliegenden axialen Enden jeweils eines Zapfenpaares sind dabei in den beiden Gabelenden je einer Gabel um ihre Achse drehbar und, bezogen auf die Drehachse der zugeordneten Welle, drehfest, d.h. drehmomentübertragend, gelagert.

Derartige Kreuzgelenke sind als klassische Wellenkupplungen im Maschinenbau seit langem bekannt und weisen im Hinblick auf die zu übertragenden Drehmomente und die zulässigen Beugewinkel zwischen den zu verbindenden Wellen, die bis zu 30° und mehr betragen können, durchaus befriedigende Eigenschaften auf. Nachteilig bei diesen bekannten Kreuzgelenken ist jedoch vor allem, daß durch die über das Zapfenkreuz erfolgende metallische Kopplung der beiden Wellen Störschwingungen sowohl im niederfrequenten als auch im akustischen Bereich ungehindert übertragen werden. Dieser Nachteil macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges, wo bei Verwendung eines derartigen Kreuzgelenkes keinerlei Isolierung gegen durch Fahrbahnunebenheiten aufgezwungene niederfrequente Schwingungen erfolgt, bemerkbar.

Es ist weiter bekannt, zum Zwecke akustischer oder schwingungsdynamischer Abkopplung ein gummielastisches Zwischenglied, z.B. eine Hardy-Scheibe oder eine Schlingenscheibe als torsionselastische Kupplung in einen drehmomentübertragenden Wellen-Strang einzuschalten. Hinsichtlich der Herausfilterung störender mittel- oder niederfrequenter Schwingungen haben diese elastischen Wellenkupplungen sich als durchaus zufriedenstellend erwiesen. Jedoch lassen diese elastischen Kupplungen lediglich kleine Beugewinkel zwischen den zu verbindenden Wellen zu, da sonst bei der Drehung der Wellen und dem damit verbundenen Taumeln der Elastomerscheiben ein Walken des Elastomermaterials erfolgt, wodurch sich die Standzeit eines derartigen Teiles signifikant verringert. Eine derartige Standzeitverschlechterung tritt bereits bei einem Beugewinkel von 3 bis 4° auf.

Es hat sich daher in der Praxis, insbesondere im Automobilbau, durchgesetzt, ein Kreuzgelenk und eine Elastomer-Scheibenkupplung im drehmomentübertragenden Strang nacheinander, d.h. in Reihe, anzuordnen, wenn sowohl ein Beugewinkel größer als 3 bis 4° als auch eine elastische und insbesondere schwingungsmäßig abkoppelnde Drehmomentübertragung gefordert ist. Diese konstruktive Lösung erfordert zum einen einen hohen konstruktiven Aufwand und benötigt zum andern einen beträchtlichen axialen Bauraum, der nicht immer vorhanden ist. Zudem vermindert die axiale Baulänge der Elastomer-Scheibenkupplung insbesondere im Bereich der Lenksäule den bei einem Frontalaufprall zur Verfügung stehenden Verformungsweg des Lenkstranges und verschlechtert dadurch das Crash-Verhalten. Schließlich verteuert eine derartige Doppel-Kupplung, bestehend aus Kreuzgelenk-Kupplung und Elastomer-Scheibenkupplung die Bauskosten beträchtlich, was insbesondere beim Kraftfahrzeug, d.h. einem Artikel der Massengüterindustrie, eine nicht zu unterschätzende Rolle spielt.

Aus der FR-A-25 68 329 ist ein Kreuzgelenk mit zwei einander gegenüberliegenden um 90° gegeneinander versetzten Gabeln bekannt. Das Kreuzgelenk enthält Zapfenpaare, welche in Lagern aufgenommen sind. Die Lager enthalten elastische Lagerteile, welche es gestatten, daß sich die Zapfen in den Lagern bei Kraftübertragung auslenken können. Die elastischen Lagerteile erstrecken sich im wesentlichen in der Ebene des Zapfenkreuzes.

Die oberbegriffsbildende FR-A-21 92 651 beschreibt ein elastisches Universalgelenk, bei dem die Lagerbolzen zweier Gabeln in Ankerelementen gehalten sind. Benachbarte Ankerelemente sind durch ein elastisches Kupplungselement miteinander verbunden.

Die US-A-3 851 498 betrifft eine flexible Kupplung, die zwei Wellen derart miteinander verbindet, daß bei der Übertragung von Drehmomenten eine kleine Winkelverschiebung zwischen den beiden Wellen zugelassen wird. Die Kupplung hat hakenförmige Elemente, zwischen denen O-Ringe zur Aufnahme der Kraft bei der Drehmomentübertragung angeordnet sind. Die O-Ringe können um ihre Achse rotieren, wodurch der bei Zugbeanspruchung auftretende Verschleiß reduziert wird.

Aus der GB-A-1 258 849 ist eine flexible Kupplung bekannt, bei der schlingenförmige Verstärkungseinlagen zur Kraftübertragung verwendet werden. Die Verstärkungseinlagen erstrecken sich in einer Ebene, die parallel zur Ebene des Zapfenkreuzes steht.

Ausgehend von diesem Stand der Technik ist es die Aufgabe der vorliegenden Erfindung, eine drehmomentübertragende Kupplung zwischen zwei Wellen zu schaffen, die den benötigten axialen Bauraum auf das absolut notwendige Minimum verringert, einen hohen nutzbaren Beugewinkel zwischen den zwei zu verbindenden Wellen zuläßt und eine gute akustische und schwingungsdynamische Isolierung aufweist.

Diese Aufgabe wird von einem Kreuzgelenk nach der Lehre des Patentanspruchs 1 gelöst.

Bevorzugte Ausführungsformen der Erfindung sind Gegenstand der abhängigen Ansprüche.

Das Kreuzgelenk gemäß der Erfindung weist unter anderen zwei einander im wesentlichen gegenüberliegende Gabeln auf, die um 90° gegeneinander versetzt bzw. gegeneinander verdreht sind. Diese Gabeln sind dabei jeweils Bestandteil je einer von zwei gelenkig miteinander zu verbindender Wellen oder die Gabeln sind jeweils mit je einem von zwei gelenkig miteinander zu verbindenden Wellenenden verbindbar. Eine derartige Verbindung kann prinzipiell durch jede Art starrer drehmomentübertragender Verbindung hergestellt werden, beispielsweise durch eine an sich bekannte Keilwellen-Verbindung oder aber auch eine Klemmverbindung. Zwischen diesen gegeneinander versetzten und einander axial teilweise überlappenden Gabeln ist ein Zapfenkreuz angeordnet, das aus zwei um 90° gegeneinander versetzten Zapfenpaaren besteht. Jedes Zapfenpaar ist dabei in den einander gegenüberliegenden Gabelenden einer Gabel so gelagert, daß die Zapfen um ihre Achse drehbar sind und gleichzeitig eine Drehmomentübertragung von der Welle über die Gabelenden auf das zugehörige Zapfenpaar erfolgen kann. Im Gegensatz zum Stand der Technik, wo die beiden Zapfenpaare einstückig und starr miteinander verbunden sind, sind die beiden Zapfenpaare gemäß der Erfindung konstruktiv voneinander getrennt, wobei die beiden Zapfenpaare zumindest in der durch das Zapfenkreuz gebildeten Ebene zumindest geringfügig gegeneinander verschwenkbar sind. Der gewählte Grad der Verschwenkbarkeit hängt dabei im wesentlichen von dem jeweils zulässigen bzw. gewünschten Torsionswinkel der beiden Wellen ab. Zur Drehmomentübertragung sind die beiden gegeneinander verschwenkbaren Zapfenpaare über ein elastisches, insbesondere gummielastisches Kupplungselement miteinander gekoppelt. Mit anderen Worten, es ist die Idee der vorliegenden Erfindung, die metallische einstückige Kopplung der beiden Zapfenpaare aufzutrennen und durch eine elastische Kopplung zu ersetzen, wodurch akustische und niederfrequente Schwingungen zuverlässig isoliert werden. Da außerdem die elastische Kopplung ausschließlich in der Zapfenkreuzebene folgt, wird zum einen durch das elastische Kupplungselement der Beugewinkel des Kreuzgelenks in keinster Weise beeinflußt und zum anderen unterliegt das elastische Kupplungselement ausschließlich einer in der Zapfenkreuzebene wirkenden Torsionsbelastung. Ein Walken und damit eine frühzeitige Zerstörung des elastischen Kupplungselementes, wie bei den bekannten Elastomer-Scheibenkupplungen, findet nicht statt, da die Zapfenkreuzebene bei der Drehung zueinander gebeugter Wellen in einer Taumelbewegung rotiert und dabei ausschließlich durch die induzierten Drehmomente belastet ist.

Gemäß einem ersten Ausführungsbeispiel erfolgt die schwingungsmäßige Entkopplung und drehmomentübertragende Kopplung der beiden Zapfenpaare dadurch, daß jedes der beiden das Zapfenkreuz bildenden Zapfenpaare als durchgehender Zapfenbolzen ausgeführt ist, wobei jedes Bolzenende einen eigenen Kreuz- oder Lagerzapfen darstellt. Der erste Zapfenbolzen weist dabei in seinem axial mittleren Bereich eine durchgehende zu seiner Längsachse im wesentlichen rechtwinklig verlaufende durchgehende Ausnehmung oder Bohrung auf, die der das zweite Zapfenpaar bildende Zapfenbolzen mit radialem Spiel durchgreift. Mit anderen Worten, der zweite Zapfenbolzen ist im ersten Zapfenbolzen im wesentlichen frei beweglich, wobei dann beispielsweise die elastische Kopplung über ein gummielastisches Kupplungselement in Form einer Gummihülse erfolgt, die in der durchgehenden Bohrung bzw. Ausnehmung angeordnet ist. Bei diesem Ausführungsbeispiel erfolgt also die torsionselastische Drehmomentübertragung dadurch, daß bei der zugelassenen Relativbewegung, d.h. Verdrehbewegung der beiden Zapfenbolzen in der Zapfenkreuzebene, die Gummibuchse in der Ausnehmung lokal, d.h. insbesondere im Bereich der axialen Enden der durchgehenden Ausnehmung, verpreßt wird, bis schließlich nach entsprechender Verhärtung des Gummis die Übertragung des gesamten anliegenden Drehmoments erfolgt. Diese Ausführungsform ist jedoch insbesondere aufgrund der hohen örtlichen Belastung des Elastomers nur für die Übertragung kleiner Drehmomente geeignet.

Im Gegensatz zum vorstehenden Ausführungsbeispiel, bei dem entweder der Durchmesser des ersten Zapfenbolzens relativ groß im Verhältnis zum Durchmesser des zweiten Zapfenbolzens sein muß oder aber der erste Zapfenbolzen im axial mittleren Bereich eine entsprechende Verdickung aufweisen muß, ist gemäß einem weiteren Ausführungsbeispiel das Zapfenkreuz konstruktiv und fertigungstechnisch weiter untergliedert. Bei diesem Ausführungsbeispiel besteht das erste Zapfenpaar aus zwei separat gefertigten getrennten Zapfen, die über ein zentrales, d.h. im Mittelpunkt des Kreuzgelenkes angeordnetes Verbindungsglied fest miteinander verbindbar sind. Das zentrale Verbindungsglied weist dabei entsprechend dem vorstehenden Ausführungsbeispiel eine zur Achse des ersten Zapfenpaares rechtwinklig verlaufende durchgehende Ausnehmung oder Bohrung auf. In diese Ausnehmung greift dann das zweite Zapfenpaar entweder in Form von zwei ebenfalls getrennten Zapfen von beiden Seiten mit radialem Spiel ein oder diese Ausnehmung oder Bohrung wird vom zweiten Zapfenpaar in Form eines durchgehenden Zapfenbolzens mit radialem Spiel durchgriffen.

Der Vorteil dieses Ausführungsbeispiels liegt insbesondere in der leichten Montage. So wird bei der Montage des erfindungsgemäßen Kreuzgelenks zuerst in einem Montagewerkzeug das zentrale Mittelstück zwischen die Gabelenden der ersten Gabel eingelegt, worauf die beiden ersten Zapfen durch die Lageraugen der Gabelenden gesteckt und mit dem Verbindungsglied beispielsweise durch Einpressen in entsprechende Ausnehmungen fest verbunden. Anschließend wird die zweite Gabel um 90° gegenüber der ersten Gabel versetzt in das Montagewerkzeug eingelegt, worauf von einer Seite der durchgehende Zapfenbolzen durch das Lagerauge des ersten Gabelendes, die Ausnehmung im zentralen Verbindungsglied und anschließend durch das Lagerauge des zweiten Gabelendes gesteckt wird. Bei der Verwendung zweier getrennter Zapfen des zweiten Zapfenpaares werden diese von beiden Seiten durch die jeweiligen Lageraugen bis in die Ausnehmung des Verbindungsgliedes gesteckt.

Die Ausnehmung im zentralen Verbindungsglied kann grundsätzlich einen beliebigen Querschnitt aufweisen, solange eine gegenseitige Beweglichkeit der beiden Zapfenbolzen in der Zapfenkreuzebene gesichert ist. Üblicherweise wird jedoch die Ausnehmung aus fertigungstechnischen Gründen in einer im wesentlichen rotationssymmetrischen Bohrung bestehen, wobei das radiale Spiel dann allseitig vorliegt. Vorzugsweise ist der Durchmesser der Ausnehmung nicht über die gesamte axiale Länge konstant, sondern nimmt von innen nach außen, zumindest in den axial äußeren Endbereichen der Ausnehmung zu. Das radiale Spiel insgesamt bzw. die Zunahme des Innendurchmessers der Ausnehmung hängt dabei im wesentlichen vom gewünschten und zulässigen Torsionswinkel des elastischen Kreuzgelenks bzw. dem Verdrehwinkel der beiden Zapfenpaare relativ zueinander ab.

Insbesondere, wenn hohe Drehmomente zu übertragen sind, ist gemäß einem besonders bevorzugten Ausführungsbeispiel der Erfindung vorgesehen, daß sämtliche axial äußeren Zapfenenden durch die jeweiligen Lageraugen der Gabelenden nach radial außen überstehen und daß das elastische Kupplungselement aus einem das gesamte Kreuzgelenk außen im wesentlichen geschlossen umlaufenden Elastomerring besteht, der auf den überstehenden Zapfenenden gelagert, d.h. im wesentlichen aufgesteckt ist. Alternativ zu dem geschlossen umlaufenden Elastomerring können auch einzelne Elastomerlaschen verwendet werden, die jeweils zwei in Umfangsrichtung benachbarte Zapfenenden miteinander verbinden. Bei diesem Ausführungsbeispiel wird das elastische Kupplungselement, d.h. hier der Elastomerring, im wesentlichen auf Zug belastet. Zur Erhöhung der Zugfestigkeit und damit zur Vergrößerung der übertragbaren Drehmomente ist der Elastomerring bzw. sind die Elastomerlaschen erfindungsgemäß (vgl. Anspruch 1) mit an sich bekannten Verstärkungseinlagen versehen.

Im Gegensatz zu den bekannten Elastomer-Scheiben-Kupplungen führt beim elastischen Kreuzgelenk der Erfindung eine Zerstörung des torsionsmomentübertragenden kupplungsgliedes nicht zu einem Totalausfall beispielsweise eines Kraftfahrzeuges. Wenn beispielsweise der Elastomerring reißt, erfolgt immer noch eine Drehmomentübertragung durch eine metallische Kupplung der beiden Zapfenpaare bzw. Zapfenbolzen, wobei lediglich in der Wellenverbindung ein Spiel in der Größe des zulässigen Torsionswinkels entsteht. Wird beispielsweise ein erfindungsgemäßes Kreuzgelenk im Lenkungssystem eines Kraftfahrzeugs verwendet, so bleibt dieses auch nach Zerstörung des elastischen Kupplungsgliedes voll lenkbar.

In einfachster Weise kann ein Elstomerring wie vorstehend beschrieben nach Art eines Aufknüpflagers unmittelbar auf den nach radial außen weisenden Zapfenenden aufgeknüpft bzw. aufgesteckt sein. Gemäß der Erfindung (vgl. Anspruch 1) weist der Elastomerring Anker- oder Lagerböcke auf, die in Anzahl und Verteilung den Zapfen entsprechen und die zumindest teilweise in das Elastomermaterial des Ringes eingebettet, beispielsweise einvulkanisiert sind. Diese Ankerböcke weisen dabei im wesentlichen mittig eine radial, bezogen auf den Elastomerring, verlaufende Bohrung zur Aufnahme der Zapfenenden und jeweils mindestens zwei zu den jeweils benachbarten Lagerzapfen weisende haken- oder fingerförmige Anker auf. Diese Anker dienen dabei zum einen der besseren Verbindung zwischen dem Elastomermaterial und den Ankerböcken durch eine hintergreifende mechanische Verbindung. Zum anderen können bei diesem Ausführungsbeispiel wiederum im Elastomer eingebettete Verstärkungseinlagen, insbesondere Rayon-Cord-Fadenschlingen vorgesehen sein, die die zueinander weisenden Anker zweier benachbarter Lagerböcke umgreifen und so zugübertragende elastische Schlingen bilden. Die Schlingen können dabei in Abhängigkeit von der gewünschten Drehmomentübertragungscharakteristik grundsätzlich nach Art einer Acht oder flach stadionförmig nach Art eines O verlaufen. Insbesondere, wenn eine progressive Torsionskennung gewünscht ist, können die zwischen den durch die Schlingen verbundenen Ankern verlaufenden Schlingenschenkel durch eine Spreizfeder oval gespreizt sein und damit vorgespannt sein.

Um unter allen Betriebsbedingungen einen metallischen Kontakt und damit eine Übertragung von zumindest akustischen Schwingungen zuverlässig zu vermeiden, kann die durchgehende Ausnehmung im ersten Zapfenbolzen bzw. im zentralen Verbindungsglied mit einer Elastomerhülse oder einer Elastomerbeschichtung ausgekleidet sein. Vorzugsweise jedoch ist eine derartige Kunststoff-, insbesondere Elastomerhülse, auf dem das zweite Zapfenpaar bildenden Zapfenbolzen angeordnet, wobei sich die Hülse zumindest über die Länge des das zentrale Verbindungsglied oder den ersten Zapfenbolzen durchgreifenden Bereichs erstreckt. Die Montage dieser Hülse kann dabei bei einer Montage wie vorher beschrieben dadurch bewerkstelligt werden, daß die Hülse bereits vor dem Einlegen des zentralen Verbindungsgliedes in die Ausnehmung eingelegt und anschließend bei dem Einstecken des zweiten Zapfenbolzens von diesem durchgriffen wird.

Vorzugsweise erstreckt sich die Hülse über die gesamte freie Länge des Zapfenbolzens zwischen den einander gegenüberliegenden Gabelenden. Bei dieser Ausgestaltung kann die Hülse neben der zuverlässigen Verhinderung eines metallischen Kontaktes zwischen den beiden Zapfenpaaren auch zu einer axial inneren Abdichtung der üblicherweise in den Lageraugen der Gabelenden verwendeten Nadellager dienen.

Die Sicherung des das zweite Zapfenpaar bildenden Zapfenbolzens gegen ein Herausfallen kann in einfachster Weise beispielsweise dadurch erfolgen, daß der Zapfenbolzen mit zumindest geringem Preßsitz in der Hülse sitzt, wobei sich die Hülse mit ihren beiden.axialen Enden gegen die Innenseiten der einander gegenüberliegenden Gabelenden bzw. der in den Lageraugen der Gabelenden angeordneten Nadellager abstützt. Insbesondere bei einer Verwendung des erfindungsgemäßen elastischen Kreuzgelenkes in Wellen mit hohen Drehzahlen, beispielsweise bei Kardanwellen im Antriebsstrang eines Kraftfahrzeugs, kann eine weitere Verbesserung der axialen Festlegung des durchgehenden Zapfenbolzens dadurch erreicht werden, daß die Hülse auf ihrer Innenfläche mindestens ein radial wirkendes Rastelement, insbesondere in Form eines ringförmig geschlossen oder unterbrochen umlaufenden Wulstes aufweist, das mit einer dazu funktionskomplementären Vertiefung, insbesondere einer ringförmig umlaufenden Nut des Zapfenbolzens in einen rastenden Eingriff bringbar ist. Mit anderen Worten, beim Einstecken des Zapfenbolzens in die Hülse wird der Ringwulst der Hülse nach radial auswärts gedrückt und schnappt dann beim Erreichen der gewünschten Endposition des Zapfenbolzens in die entsprechend angeordnete Ringnut. Da der Zapfenbolzen insgesamt im wesentlichen symmetrisch zum Mittelpunkt des Kreuzgelenks angeordnet ist, sind die auftretenden Zentrifugalkräfte auch bei hohen Drehzahlen relativ gering, so daß eine derartige Festlegung des Zapfenbolzens für die allermeisten Anwendungsfälle ausreicht.

Bei sämtlichen vorstehenden Ausführungsformen erfolgt bestimmungsgemäß im Zapfenkreuz selbst keinerlei unmittelbare Kraft- bzw. Drehmomentübertragung. Aufgrund des radialen Spiels des Zapfenbolzens in der zugehörigen Ausnehmung des zentralen Verbindungsgliedes bzw. des ersten Zapfenbolzens kann ein, wenn auch geringer, axialer und radialer Versatz der beiden zu verbindenden Wellen gegeneinander nicht ausgeschlossen werden. Mit anderen Worten, eine exakte Mittenzentrierung der beiden Wellen zueinander ist bei den vorstehend beschriebenen Ausführungsformen nicht gegeben. Zur Erzielung einer derartigen Mittenzentrierung, d.h. insbesondere zur Erzielung einer exakten Fluchtung der zu verbindenden Wellen in ungebeugtem Zustand ist gemäß einem bevorzugten Ausführungsbeispiel der Erfindung vorgesehen, daß die Hülse im axial mittleren Bereich auf ihrer Außenfläche einen ringförmig geschlossen oder unterbrochen umlaufenden vorspringenden Bereich aufweist, der im wesentlichen eine torusteilschalenförmige wulstartige Gestalt hat. Mit anderen Worten, im Querschnitt weist dieser Vorsprung eine kreisbogenförmige Außenkontur auf. Dieser Vorsprung ist mit einer dazu im wesentlichen form- und funktionskomplementären Ausnehmung in der Innenfläche der durchgehenden Bohrung des ersten Zapfenbolzens oder des zentralen Verbindungsgliedes in Eingriff bringbar. Dadurch wird insgesamt eine Kalottenlagerung der Hülse und damit verbunden des zweiten Zapfenbolzens im ersten Zapfenbolzen bzw. im zentralen Verbindungsglied erreicht, wodurch sich zum einen eine allseitige Verschwenkbarkeit der beiden Zapfenpaare gegeneinander bezüglich des zentralen Zapfenschnittpunktes ergibt und zum anderen ein axialer oder radialer Versatz der beiden Wellen zuverlässig ausgeschlossen wird. Alternativ dazu ist auch eine Gestaltung möglich, bei der der torusteilschalenförmige wulstartige Vorsprung auf der Innenfläche der Ausnehmung im zentralen Verbindungsglied und die entsprechend form- und funktionskomplementäre Ausnehmung in der Hülse bzw. gegebenenfalls im Zapfenbolzen selbst angeordnet ist.

Da es sich bei den kalottenförmigen Ausnehmungen im Bereich einer Bohrung um fertigungstechnisch relativ schwer zu bewältigende Geometrien handelt, ist gemäß einem Ausführungsbeispiel der Erfindung vorgesehen, die Ausnehmung im ersten Zapfenbolzen bzw. im zentralen Verbindungsglied als rotationssymmetrische Durchgangsbohrung zu fertigen und anschließend ein separat gefertigtes die kalottenförmige Vertiefung aufweisendes Einlageelement in die Bohrung einzubringen. Dabei muß sich dieses Einlageelement nicht notwendigerweise über die gesamte axiale Länge der Bohrung erstrecken; vielmehr genügt es durchaus, wenn dieses Einlageelement zumindest in dem Bereich, in dem der Führungsvorsprung der Hülse anliegt, angeordnet ist. Ein derartiges Einlageelement in relativ komplexer Geometrie läßt sich in einfacher Weise beispielsweise aus einem Sintermetall herstellen.

Die Zapfen sind in jedem Fall in den Lageraugen der Gabelenden leicht drehbar, beispielsweise mittels entsprechender Nadellager, gelagert. Diese leichte Drehbarkeit darf durch das Aufstecken des Elastomerrings bzw. der im Elastomer eingebetteten Ankerböcke nicht beeinträchtigt werden. Gemäß einem weiteren bevorzugten Ausführungsbeispiel sind zwischen den radial über die Gabelenden hervorstehenden Lagerzapfen und den korrespondierenden Aufnahmebohrungen der Ankerböcke Lagerbuchsen, insbesondere Gleitlagerbuchsen aus gleitfähigem Material, beispielsweise Nylon oder dergleichen, angeordnet. Diese Gleitlagerbuchsen können dabei als einseitig geschlossene Kappenbuchsen ausgebildet sein, die nach der eigentlichen Montage des elastischen Kreuzgelenks in den Lagerspalt zwischen Ankerböcken und Zapfenenden eingepreßt werden, wobei vorzugsweise eine Kammer zwischen der Stirnseite der Zapfenenden und der Buchsenstirnwand vorgesehen ist. Diese Kammer kann bei der Montage der Buchsen mit Öl oder Fett gefüllt werden, das beispielsweise über entsprechende Schmiernuten im Zapfenbolzen zu den Gleitbereichen der Gleitbuchsenlagerung und zu den Nadellagern transportiert werden kann. So läßt sich in einfachster Weise eine Lebensdauerschmierung der verwendeten Lager erzielen.

Insbesondere bei Verwendung eines erfindungsgemäßen Kreuzgelenks bei höheren Drehzahlen besteht die Gefahr, daß durch die aufgrund der von der Drehachse entfernten Position der Gleitlagerbuchsen wirkenden hohen Zentrifugalkräfte die Buchsen nach radial außen weggeschleudert werden. Um dies zu verhindern, wird die Buchse als reine Hülsenbuchse vorgefertigt und vor dem Aufstecken des Elastomerrings bzw. der Ankerböcke in diese eingelegt oder auf die Zapfenenden aufgesteckt, wobei die Hülsenbuchse radial innen, bezogen auf das gesamte Kreuzgelenk, einen Bund aufweist, der in eine entsprechende Ausnehmung der Lagerböcke eingreift. Aufgrund dieses Hintergriffs ist ein Herausschleudern der Gleitlagerbuchse nicht mehr möglich. Auch bei diesem Ausführungsbeispiel kann eine Lebensdauerschmierung dadurch erzielt werden, daß anschließend, d.h. letztendlich nach der Fertigmontage, auf die äußeren Buchsenränder ein Deckel aufgesetzt und beispielsweise verklebt oder verschweißt, insbesondere ultraschallverschweißt wird, wobei gleichzeitig in den zwischen dem Deckel und der Stirnseite der Zapfenenden entstehenden Hohlraum wiederum Fett gegeben wird.

Grundsätzlich kann das erfindungsgemäße Kreuzgelenk für alle Arten von drehmomentübertragenden Wellenverbindungen verwendet werden, wo gleichzeitig eine akustische bzw. schwingungsmäßige Abkopplung und ein relativ großer Beugewinkel zwischen den beiden Wellen erwünscht oder erforderlich ist. Besonders vorteilhaft jedoch ist die Verwendung eines erfindungsgemäßen Kreuzgelenks zur akustischen und schwingungsmäßigen Entkopplung im Antriebsstrang, insbesondere in der Kardanwelle, und/oder im Bereich des Lenkungsstrangs eines Kraftfahrzeuges, da in diesem Bereich die Anforderungen an die Schwingungsentkopplung bei gleichzeitig geringem Baumaß und hohem übertragbarem Drehmoment besonders hoch sind.

Im folgenden wird die Erfindung anhand von Ausführungsbeispielen in Verbindung mit den beiliegenden Zeichnungen näher erläutert. Es zeigt
- Fig. 1: ein erstes Ausführungsbeispiel eines elastischen Kreuzgelenks gemäß der Erfindung in teilweise geschnittener Ansicht;
- Fig. 2: ein zweites Ausführungsbeispiel eines erfindungsgemäßen elastischen Kreuzgelenks ebenfalls in teilweise geschnittener Darstellung;
- Fig. 3: einen Schnitt durch das Ausführungsbeispiel nach Fig. 2 entlang I-I; und
- Fig. 4: ein drittes Ausführungsbeispiel eines erfindungsgemäßen elastischen Kreuzgelenks ebenfalls in teilweise geschnittener Darstellung.

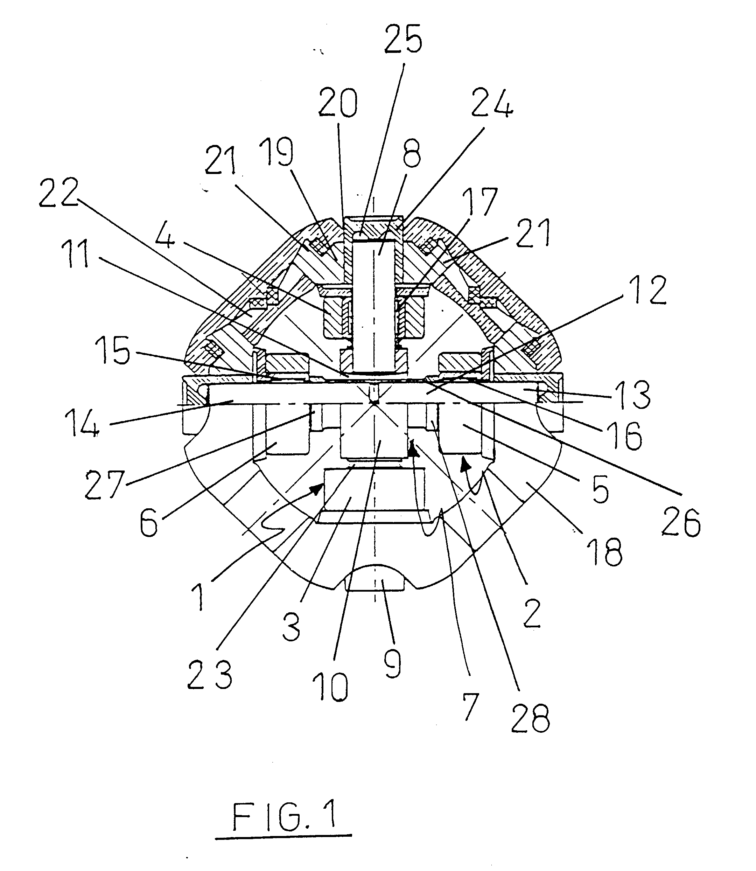

Das in der Fig. 1 dargestellte Ausführungsbeispiel eines elastischen Kreuzgelenks gemäß der vorliegenden Erfindung weist zwei um 90° gegeneinander versetzte Gabeln 1 und 2 auf, wobei sich in der Darstellung nach Fig. 1 die Gabel 1 aus der Zeichenebene vom Betrachter weg und die Gabel 2 aus der Zeichenebene zum Betrachter hin erstreckt. Die Gabeln sind dabei in nicht dargestellter Weise mit jeweils einem von zwei zu verbindenden ebenfalls nicht dargestellten Wellenenden verbunden. In dem durch die Gabelenden 3 und 4 der ersten Gabel 1 und die Gabelenden 5 und 6 der zweiten Gabel 2 gebildeten Raum ist ein Zapfenkreuz 7 angeordnet. Das erste Zapfenpaar des Zapfenkreuzes 7 besteht aus zwei separaten Zapfen 8 und 9, die über ein zentrales Zwischenglied 10 fest, d.h. insbesondere drehfest, bezogen auf die Drehbewegung der zugeordneten Welle, miteinander verbunden sind. Das Zwischenglied 10 weist eine im wesentlichen rechtwinklig zur Achse der Zapfen 8 und 9 verlaufende Ausnehmung 11 in Form einer Durchgangsbohrung auf. Diese Ausnehmung 11 wird von einem durchgehenden Zapfenbolzen 12 mit allseitigem radialem Spiel durchgriffen. Dies bedeutet insbesondere, daß der Zapfenbolzen 12 in der Ausnehmung 11 in der durch das Zapfenkreuz gebildeten Ebene gegenüber dem ersten Zapfenpaar 8,9 um einen bestimmten Torsionswinkel verschwenkbar ist, der grundsätzlich im wesentlichen durch das radiale Übermaß der Ausnehmung 11 gegenüber dem Zapfenbolzen 12 bestimmt wird.

Der Zapfenbolzen 12 durchgreift mit beiden axial äußeren Enden 13 und 14 die Lageraugen der zugeordneten Gabelenden 5 und 6 und ist in diesen Lageraugen über lediglich schematisch dargestellte Nadellager 15 und 16 leicht drehbar gelagert. Die Zapfenenden 13 und 14 weisen gegenüber den Gabelenden 5 und 6 einen radialen, d.h. nach außen weisenden Überstand auf.

In prinzipiell der gleichen Weise sind die Lagerzapfen 8 und 9 in den Nadellagern 17 der zugeordneten Gabelenden 3 und 4 gelagert und weisen ebenfalls einen nach radial außen weisenden Überstand auf. Auf diese nach radial außen überstehenden Zapfenenden ist ein Elastomerring 18 aufgesteckt, der das gesamte Kreuzgelenk im wesentlichen geschlossen umlaufend auf den Zapfenenden gelagert ist. Dies bedeutet mit 5 anderen Worten, daß die beiden Zapfenpaare, bestehend zum einen aus den Zapfen 8 und 9 und zum anderen aus dem Zapfenbolzen 12 in der Zapfenkreuzebene über diesen Elastomerring elastisch drehmomentübertragend unter Zulassung eines definierten lastabhängigen Torsionswinkels miteinander gekoppelt sind.

Im Elastomermaterial des Elastomerrings 18 sind Ankerböcke 19 eingebettet, die mittig eine Bohrung 20 zur Aufnahme der Zapfenenden 8 aufweisen. Weiter sind an den Lagerböcken 19 beidseitig im wesentlichen symmetrisch zur Bohrung 20 je ein finger- oder hakenförmiger Anker 21 angeordnet. Die zueinander weisenden Anker jeweils zweier benachbarter Ankerböcke 19 sind über schlingenförmige Verstärkungseinlagen 22 miteinander verbunden. Beim Ausführungsbeispiel nach Fig. 1 sind die Schlingen dabei sich zwischen den Ankern überkreuzend in Form einer Acht angeordnet. Diese Schlingen 22 dienen dabei als elastische Zugmittel bei der Übertragung eines Drehmomentes zwischen den beiden zu verbindenden Wellen über die Gabeln und die zugeordneten Zapfenpaare.

Das Zapfenende des Lagerzapfens 8 ist wie in prinzipiell gleicher Weise die übrigen Zapfenenden in der Bohrung 20 des Ankerbocks 19 über eine Gleitlagerbuchse 24 leicht drehbar gelagert. Die kappenförmige Gleitlagerbuchse 24 wird bei der Montage des elastischen Kreuzgelenkes der Erfindung nach der Montage des Elastomerrings 18 eingepreßt. Die Gleitlagerbuchse 24 besteht dabei aus Nylon. Zwischen der Stirnseite des Zapfens 8 und dem Kappenboden der Buchse 24 wird dabei ein Hohlraum 25 belassen, der bei der Montage der Gleitlagerbuchse 24 mit Fett gefüllt wird. Dieses Fett dient dabei über nicht dargestellte Schmiernuten zur Schmierung der Gleitlagerbuchse und der Nadellager.

Auf dem Zapfenbolzen 12 ist eine Kunststoffhülse 26 angeordnet, die sich über die gesamte Länge zwischen den Gabelenden 5 und 6 erstreckt. Diese Kunststoffhülse 26 dient dabei zum einen der zuverlässigen Verhinderung eines metallischen Kontaktes zwischen den beiden Zapfenpaaren 8,9 und 12 unter allen Betriebsbedingungen und bewirkt gleichzeitig mit ihren gegen die Nadellager anliegenden verdickten Enden 27 und 28 eine Abdichtung der Nadellager 15 und 16.

Eine Abdichtung der Nadellager 17 der Zapfen 8 und 9 erfolgt über zwischen dem zentralen Verbindungsglied 10 und den Nadellagern 17 angeordnete Dichtmanschetten 23.

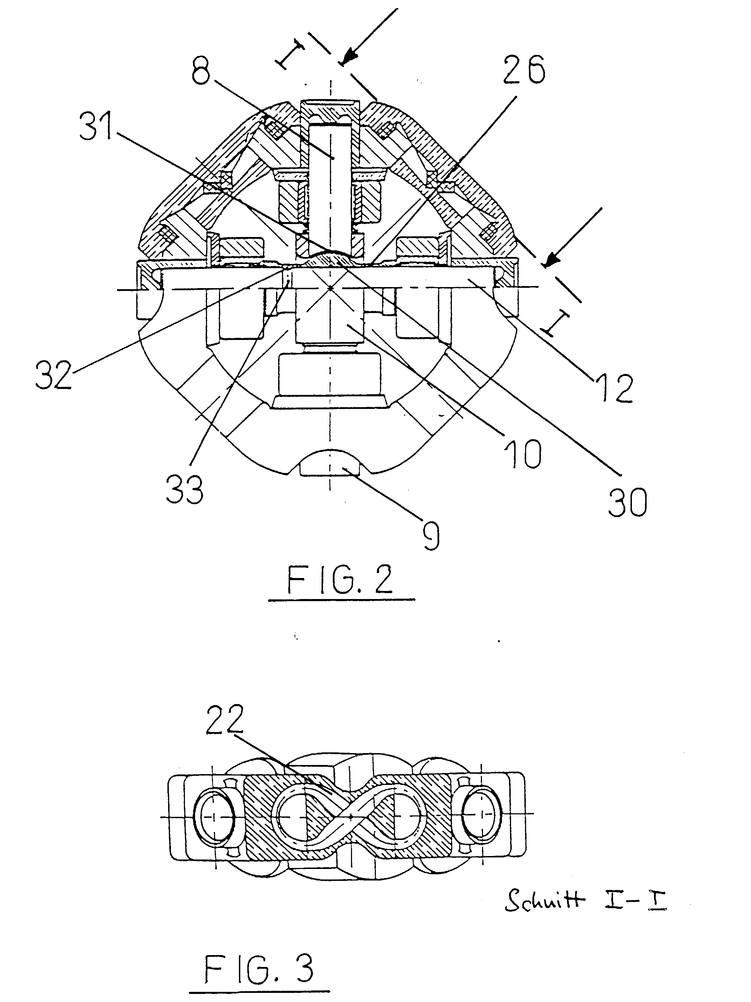

In Fig. 2 ist ein weiteres Ausführungsbeispiel der Erfindung dargestellt. Das in Fig. 2 dargestellte elastische Kreuzgelenk unterscheidet sich von dem Kreuzgelenk nach Fig. 1 im wesentlichen dadurch, daß eine Mittenzentrierung vorgesehen ist, die eine genaue axiale Ausrichtung der beiden zu verbindenden Wellen zueinander ermöglicht. Zur Erzielung einer derartigen Mittenzentrierung weist die Hülse 26 im axial mittleren Bereich auf ihrer Außenfläche einen ringförmig geschlossen umlaufenden wulstartigen Vorsprung 30 auf, der im wesentlichen die Form einer Torusteilschale besitzt. Dieser Vorsprung 30 ist in einer dazu im wesentlichen form- und funktionskomplementären Ausnehmung 31 in der Innenfläche der durchgehenden Bohrung des zentralen Verbindungsgliedes 10 gelagert. Durch diese Gestaltung wird insgesamt ein nach Art eines Kugellagers wirkendes Kalottenlager gebildet, das eine im wesentlichen freie Beweglichkeit der beiden Zapfenpaare 8,9 und 13 relativ zueinander zuläßt, aber gleichzeitig eine axial und radial genau definierte Stellung der Zapfenpaare und damit der Wellen zueinander gewährleistet. Mit anderen Worten, sowohl ein axialer als auch ein radialer Versatz wird ausgeschlossen.

Um den Zapfenbolzen 12 zuverlässig gegen ein Herausfallen zu sichern, weist die Hülse auf ihrer Innenfläche ein Rastelement in Form eines ringförmig geschlossen umlaufenden Innenwulstes 32 auf, das mit einer dazu komplementären Ringnut 33 in Rasteingriff bringbar ist.

In Fig. 3 ist das Lager nach dem Ausführungsbeispiel der Fig. 2 entlang der Schnittlinie I-I geschnitten dargestellt. Der Schnitt erfolgt dabei im wesentlichen in der durch die schlingenartigen Verstärkungseinlagen 22 gebildeten Schlingenebene. Wie aus dieser Darstellung ersichtlich ist, ist bei diesem Ausführungsbeispiel die Verstärkungseinlage in Form einer liegenden Acht ausgebildet. Diese Gestaltung stellt jedoch lediglich ein Ausführungsbeispiel dar; die Schlingengestaltung kann in Abhängigkeit von den gewünschten Torsionseigenschaften beliebig variiert werden.

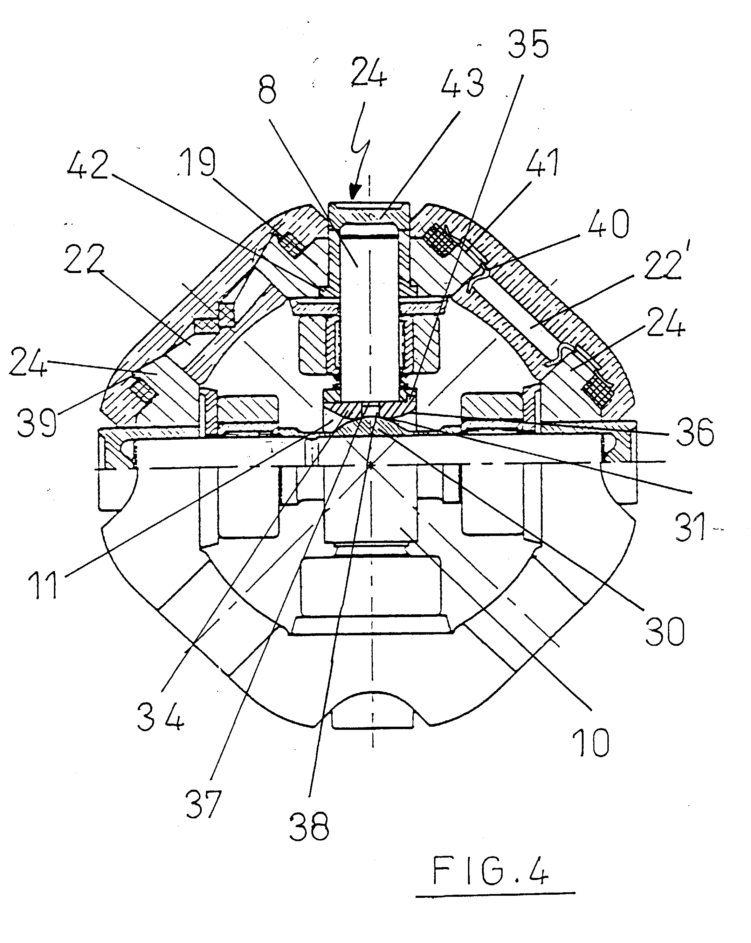

In Fig. 4 schließlich ist ein weiteres Ausführungsbeispiel der Erfindung in vergrößerter Ansicht dargestellt. Bei diesem Ausführungsbeispiel erfolgt ebenfalls eine Mittenzentrierung der beiden zu verbindenden Wellen zueinander wie beim Ausführungsbeispiel nach Fig. 2, doch ist hier die Ausnehmung 31 nicht in der Innenwand der Ausnehmung 11 direkt angeordnet, sondern in einem Einlegeteil 34 aus einem Sintermaterial. Diese Gestaltung hat insbesondere den Vorteil, daß die Ausnehmung 11 in einfachster Weise als durchgehende im wesentlichen rotationssymmetrische Bohrung ausgeführt werden kann; die kreisförmig geschlossen umlaufende Sinterhülse kann in einfacher Weise in einem entsprechenden Formwerkzeug hergestellt werden. Das Einlegeteil 34 bzw. die Sinterhülse weist einseitig einen hintergriffartigen Vorsprung 35 auf, der mit einem entsprechenden Absatz 36 im zentralen Verbindungsglied 10 in Eingriff bringbar ist. Bereits dadurch ist bei der Vormontage des Einlegeteils 34 eine genaue axiale Position festgelegt. Zur weiteren Fixierung des Einlegeteils 24 weist der Zapfen 8 an seinem axial innenliegenden Ende einen Zentrierabsatz 37 auf, der mit einer entsprechenden Bohrung 38 im Einlegeteil in Eingriff bringbar ist.

Wie ebenfalls aus der Darstellung nach Fig. 4 zu ersehen ist, nimmt der wirksame Innendurchmesser der Ausnehmung 11 bzw. des Einlegteils 34 von axial innen nach axial außen zu, wodurch insbesondere in Verbindung mit dem wulstartigen Vorsprung 30 der zulässige Torsionswinkel vergrößert wird.

Insbesondere bei schnelldrehenden Wellen, beispielsweise im Bereich von Kardanwellen, wirken aufgrund der radial weit außenliegenden Position der Verstärkungsschlingen 22,22' und der Gleitlagerbuchsen relativ große Fliehkräfte auf diese Bauteile. Um beim Vorliegen derartiger Bedingungen ein Abgleiten der Verstärkungsschlingen 22,22' von den zugeordneten Ankern 24 zuverlässig zu verhindern, sind im Ausführungsbeispiel nach Fig. 4 verschiedene Fixiermittel dargestellt. In der linken Hälfte der Darstellung weisen die Anker 24 hakenartig übergreifende vorspringende Bereiche 39 auf, die ein Herunterrutschen der Schlingen 22 verhindern sollen. Als alternative Möglichkeit ist in der rechten Darstellung nach Fig. 4 eine Fixierung der Schlingen durch an sich bekannte Federklemmen 40 dargestellt, die auf eine Nut 41 der Anker 24 aufgeklipst werden. Um zu verhindern, daß bei derartigen mit hohen Drehzahlen belasteten elastischen Kreuzgelenken die Gleitlagerbuchsen 24 nach radial außen weggeschleudert werden, sind diese im Ankerbock 19 in an sich bekannter Weise über einen radial hintergreifenden Bund 42 gesichert. Dies bedeutet jedoch, daß in diesem Fall die Gleitlagerbuchsen 24 vor der Montage des Elastomerrings von radial innen in den Ankerbock eingeführt werden müssen. Bei dieser Montageart ist es vorteilhaft, die Kappe 43 der Gleitlagerbuchse erst nach der Endmontage unter gleichzeitiger Befüllung mit einem Schmiermittel an der eigentlichen Buchse durch Ultraschallschweißen zu befestigen.

## Patentansprüche

1. Kreuzgelenk mit zwei einander gegenüberliegenden um 90° gegeneinander versetzten Gabeln (1, 2), die jeweils Bestandteil je einer von zwei gelenkig miteinander zu verbindenden Wellen sind oder die jeweils mit je einem von zwei gelenkig miteinander zu verbindenden Wellenenden verbindbar sind, und mit zwei um 90° gegeneinander versetzten ein Zapfenkreuz (7) bildenden Zapfenpaaren (8, 9; 12), die in den jeweiligen Gabelenden (3, 4; 5, 6) um ihre Achse drehbar und, bezogen auf die Drehachse der Wellen, drehmomentübertragend gelagert sind, wobei die beiden Zapfenpaare (8, 9; 12)in der durch das Zapfenkreuz (7) gebildeten Ebene zumindest geringfügig gegeneinander verschwenkbar sind, wobei jeder Zapfen (8, 9; 12) in einem Ankerbock (19) gelagert ist und einander benachbarte Ankerböcke (19) durch ein elastisches Kupplungselement miteinander verbunden sind, dadurch **gekennzeichnet,** daß das elastische Kupplungselement ortsfest angeordnete schlingenförmige Verstärkungseinlagen (22) enthält, die jeweils zwei benachbarte Ankerböcke (19) miteinander verbinden, und daß die schlingenförmigen Verstärkungseinlagen (22) entlang dem Umfang des Kreuzgelenks in einer Schlingenebene liegen, die senkrecht zur Ebene des Zapfenkreuzes ist.

2. Kreuzgelenk nach Anspruch 1, dadurch **gekennzeichnet,** daß jedes der beiden Zapfenpaare als durchgehender Zapfenbolzen ausgeführt ist, wobei der eine Zapfenbolzen im axial mittleren Bereich eine durchgehende, in bezug auf seine Achse im wesentlichen rechtwinklig verlaufende Ausnehmung (11) aufweist, die den anderen Zapfenbolzen (12) mit radialem Spiel durchgreift.

3. Kreuzgelenk nach Anspruch 1, dadurch **gekennzeichnet,** daß das erste der beiden Zapfenpaare aus zwei getrennten Zapfen (8, 9) besteht, die über ein zentrales Verbindungsglied (10) miteinander verbindbar sind, wobei das zentrale Verbindungsglied (10) eine zur Achse des ersten Zapfenpaares rechtwinklig verlaufende durchgehende Ausnehmung (11) aufweist, in die das zweite Zapfenpaar entweder in Form von zwei ebenfalls getrennten Zapfen von beiden Seiten mit radialem Spiel eingreift oder die vom zweiten Zapfenpaar in Form eines durchgehenden Zapfenbolzens (12) mit radialem Spiel durchgriffen wird.

4. Kreuzgelenk nach Anspruch 2 oder 3, dadurch **gekennzeichnet,** daß der Durchmesser der Ausnehmung (11) zumindest in den axial äußeren Endbereichen von innen nach außen zunimmt.

5. Kreuzgelenk nach einem der vorhergehenden Ansprüche, dadurch gekennzeichnet, daß jeder Ankerbock (19) mindestens zwei zu den jeweils benachbarten Zapfen weisende haken- oder fingerförmige Anker (21) und eine im wesentlichen mittigen radial zum Kreuzgelenk verlaufende Bohrung (20) zur Aufnahme des Zapfenendes hat.

6. Kreuzgelenk nach Anspruch 5, **gekennzeichnet** durch im Elastomer eingebettete, die zueinander weisenden Anker (21) zweier benachbarter Ankerböcke (19) umgreifende schlingenförmige Verstärkungseinlagen (22) aus Rayon-Cordfadenschlingen.

7. Kreuzgelenk nach Anspruch 6, dadurch **gekennzeichnet,** daß die Schlingen nach Art einer "Acht" oder flach nach Art eines Ovals verlaufen, wobei die zwischen den Ankern (21) verlaufenden Schlingenschenkel parallel ausgerichtet oder durch eine Spreizfeder oval aufgespreizt sind.

8. Kreuzgelenk nach einem der Ansprüche 1 bis 7, **gekennzeichnet** durch eine Hülse (26) auf dem das zweite Zapfenpaar bildenden Zapfenbolzen (12), wobei sich die Hülse (26) zumindest über die Länge des das zentrale Verbindungsglied (10) oder den ersten Zapfenbolzen durchgreifenden Bereichs über die gesamte freie Länge des Zapfenbolzens zwischen den Gabelenden (5, 6) erstreckt.

9. Kreuzgelenk nach Anspruch 8, dadurch **gekennzeichnet,** daß die Hülse (26) auf ihrer Innenfläche mindestens ein radial wirkendes Rastelement (32) aufweist, das mit einer dazu funktionskomplementären Vertiefung (33) des Zapfenbolzens (12) in einen rastenden Eingriff bringbar ist.

10. Kreuzgelenk nach Anspruch 8 oder 9, dadurch **gekennzeichnet,** daß die Hülse im axial mittleren Bereich auf ihrer Außenfläche einen ringförmig geschlossen oder unterbrochen umlaufenden vorspringenden im wesentlichen torusteilschalenförmigen wulstartigen Vorsprung (30) aufweist, der mit einer dazu im wesentlichen form- und funktionskomplementären Ausnehmung (31) in der Innenfläche der durchgehenden Bohrung des ersten Zapfenbolzens oder des zentralen Verbindungsgliedes (10) in Eingriff bringbar ist.

11. Kreuzgelenk nach einem der Ansprüche 2 bis 10, dadurch **gekennzeichnet,** daß die Bohrung des ersten Zapfenbolzens oder des zentralen Verbindungsgliedes (10) zumindest in den Bereichen, in denen der zweite Zapfenbolzen (12) oder die Hülse (26) anliegt, mit einem separaten Einlageelement versehen ist.

12. Kreuzgelenk nach einem der Ansprüche 4 bis 11, dadurch **gekennzeichnet,** daß jeder Zapfen (8) auf seinem axial außen überstehenden Zapfenende eine Lagerbuchse (24) hat, und daß zwischen der Stirnseite des Zapfenendes und einer Stirnwand der Lagerbuchse (24) eine Kammer zur Aufnahme eines Schmiermittels vorgesehen ist.

13. Verwendung eines Kreuzgelenks nach einem der vorstehenden Ansprüche zur akustischen und schwingungsmäßigen Entkopplung im Antriebsstrang, in einer Kardanwelle und/oder im Bereich eines Lenkungsstrangs eines Kraftfahrzeugs.

## Claims

1. A universal joint comprising two forks (1, 2) which are situated opposite one another with a 90° offset and which are each a part of each one of two shafts which are to be pivotally interconnected, or which are adapted each to be connected to each one of two shaft ends which are to be pivotally interconnected, and comprising two journal pairs (8, 9; 12) which are offset by 90o from another and which form a journal cross (7) and which are rotatable about their axis in the respective fork ends (3, 4; 5, 6) and, relative to the rotational axis of the shafts, are mounted for torque transmission, the two journal pairs (8, 9; 12) being at least slightly pivotable relatively to one another in the plane formed by the journal cross (7), each journal (8, 9; 12) being mounted in an anchor bracket (19) and adjacent anchor brackets (19) are interconnected by an elastic coupling element, characterised in that the elastic coupling element contains reinforcing inlays (22) in loop form, which are disposed to be stationary and which each interconnect two adjacent anchor brackets (19) and in that the reinforcing inlays (22) in loop form are situated along the periphery of the universal joint in a loop plane which is perpendicular to the plane of the journal cross.

2. A universal joint according to Claim 1, characterised in that each of the two journal pairs is constructed as a continuous journal bolt, one journal bolt having in the axially central zone a continuous recess (11) extending substantially at right angles with respect to its axis, the other journal bolt (12) extending with radial clearance through said recess (11).

3. A universal joint according to Claim 1, characterised in that the first of the two journal pairs consists of two separate journals (8, 9) which are adapted to be interconnected via a central connecting member (10), the central connecting member (10) having a continuous recess (11) extending at right angles to the axis of the first journal pair, the second journal pair engaging in said recess (11) in the form of two likewise separate journals from both sides with radial clearance or else the second journal pair extends in the form of a continuous journal bolt (12) through said recess (11) with radial clearance.

4. A universal joint according to Claim 2 or 3, characterised in that the diameter of the recess (11) increases outwardly at least in the axial outer end zones.

5. A universal joint according to any one of the preceding claims, characterised in that each anchor bracket (19) has at least two hook-shaped or finger-shaped anchors (21) which point towards the respectively adjacent journal and a substantially central bore (20) extending radially to the universal joint for the purpose of accommodating the journal end.

6. A universal joint according to Claim 5, characterised by reinforcing inlays (22) in loop form and consisting of rayon cord filament loops, which are embedded in the elastomer and which engage around the facing anchors (21) of two adjacent anchor brackets (19).

7. A universal joint according to Claim 6, characterised in that the loops extend after the style of a figure of eight or flat after the style of an oval, the loop limbs which extend between the anchors (21) being aligned parallel to one another or spread out to be oval by an expansion spring.

8. A universal joint according to any one of Claims 1 to 7, characterised by a sleeve (26) on the journal bolt (12) forming the second journal pair, the sleeve (26) extending over the entire free length of the journal bolt between the fork ends (5, 6) at least over the length of the zone through which the central connecting member (10) or the first journal bolt extends.

9. A universal joint according to Claim 8, characterised in that on its inner surface the sleeve (26) has at least one radially acting catch element (32) which can be brought into latching engagement with a depression (33) in the journal bolt (12), said depression being complementary functionally to the catch element (32).

10. A universal joint according to Claim 8 or 9, characterised in that in the axially central zone the sleeve has on its outer surface a projection (30) in the form of a bead which is closed to be annular or which is interrupted in its peripheral projection and which has substantially the shape of a toroidal part-dish, the said projection being adapted to be brought into engagement with a recess (31) in the inner surface of the continuous bore in the first journal bolt or in the central connecting member (10), said recess (31) being substantially complementary with the projection (30) in shape and function.

11. A universal joint according to any one of Claims 2 to 10, characterised in that the bore in the first journal bolt or in the central connecting member (10) is provided with a separate inlay element at least in the zones in which the second journal bolt (12) or the sleeve (26) is in contact.

12. A universal joint according to any one of Claims 4 to 11, characterised in that on its axially outwardly projecting end each journal (8) has a bearing bush (24) and in that a chamber to accommodate a lubricant is provided between the end face of the journal end and an end wall of the bearing bush (24).

13. Use of a universal joint according to any one of the preceding claims for acoustic and vibrational decoupling in the line of drive, in a cardan shaft and/or in the steering line zone in a motor vehicle.

## Revendications

1. Joint universel comprenant deux fourches (1, 2) opposées l'une à l'autre et décalées de 90° l'une par rapport à l'autre, qui font partie chacune d'un de deux arbres à relier l'un à l'autre de façon articulée, ou qui peuvent être reliées chacune à l'un de deux bouts d'arbre qu'il s'agit de relier l'un à l'autre de façon articulée, et deux paires de tourillons (8, 9 ; 12) décalées l'une par rapport à l'autre de 90°, qui forment un croisillon de tourillons (7), et qui sont montées de manière à pouvoir tourner autour de leur axe dans les extrémités correspondantes (3, 4 ; 5, 6) des fourches et de manière à transmettre le couple par rapport à l'axe de rotation des arbres, les deux paires de tourillons (8, 9 ; 12) pouvant osciller l'une par rapport à l'autre, au moins d'un petit angle, dans le plan formé par le croisillon de tourillons (7), chaque tourillon (8, 9 ; 12) étant monté dans une patte d'ancrage (19) et les pattes d'ancrage (19) mutuellement adjacentes étant reliées entre elles par un élément d'accouplement élastique, caractérisé en ce que l'élément d'accouplement élastique renferme des insertions de renforcement (22) en forme de boucle disposées en position fixe, dont chacune réunit deux pattes d'ancrage (19) voisines l'une de l'autre, et en ce que les insertions de renforcement (22) en forme de boucle sont disposées le long de la périphérie du joint universel, dans un plan de boucle qui est perpendiculaire au plan du croisillon de tourillons.

2. Joint universel selon la revendication 1, caractérisé en ce que chacune des deux paires de tourillons est réalisée sous la forme d'un tourillon continu, l'un des tourillons présentant, dans sa région axialement centrale, un évidement (11) qui s'étend sensiblement perpendiculairement à son axe et que l'autre tourillon (12) traverse avec jeu radial.

3. Joint universel selon la revendication 1, caractérisé en ce que la première des deux paires de tourillons est constituée par deux tourillons séparés (8, 9) qui peuvent être assemblés l'un à l'autre au moyen d'un élément d'assemblage central (10), l'élément d'assemblage central (10) présentant un évidement traversant (11) qui s'étend perpendiculairement à l'axe de la première paire de tourillons et, soit la deuxième paire de tourillons, elle aussi sous la forme de deux tourillons séparés, est engagée dans cet évidement par les deux côtés et avec jeu radial, soit la deuxième paire de tourillons, sous la forme d'un tourillon traversant (12), traverse cet évidement avec jeu radial.

4. Joint universel selon la revendication 2 ou 3, caractérisé en ce que le diamètre de l'évidement (11) croît de l'intérieur vers l'extérieur, au moins dans les régions terminales axialement extérieures.

5. Joint universel selon l'une des revendications précédentes, caractérisé en ce que chaque patte d'ancrage (19) comporte au moins deux ancrages (21) en forme de crochets ou de doigts, qui pointent vers les tourillons respectivement adjacents, et un perçage (20) sensiblement central, s'étendant radialement par rapport au joint universel, et destiné à recevoir l'extrémité du tourillon.

6. Joint universel selon la revendication 5, caractérisé par des insertions de renforcement (22) en forme de boucle élastomère, composées de boucles en fil de rayonne câblé, qui entourent les ancrages (21) de deux pattes d'ancrage (19) adjacentes qui pointent l'un vers l'autre.

7. Joint universel selon la revendication 6, caractérisé en ce que les boucles s'étendent à la façon d'un "huit" ou à plat à la façon d'un ovale, les branches des boucles qui s'étendent entre les ancrages (21) étant orientées parallèlement ou étant écartées par un ressort d'écartement pour prendre une forme ovale.

8. Joint universel selon l'une des revendications 1 à 7, caractérisé par une douille (26) agencée sur le tourillon (12) qui forme la deuxième paire de tourillons, la douille (26) s'étendant au moins sur la longueur de la région qui traverse l'élément d'assemblage central (10) ou le premier tourillon, en particulier sur toute la longueur libre du tourillon entre les extrémités (5, 6) de la fourche.

9. Joint universel selon la revendication 8, caractérisé en ce que la douille (26) présente, sur sa surface intérieure, au moins un élément de verrouillage (32) agissant dans la direction radiale, qui peut être mis en prise de verrouillage avec un évidement (33) du tourillon (12) qui est complémentaire de cet élément par sa fonction.

10. Joint universel selon la revendication 8 ou 9, caractérisé en ce que la douille présente, dans sa région axialement centrale, sur sa surface extérieure, une protubérance (30) en forme de bourrelet, circonférentielle, fermée en anneau ou interrompue, sensiblement en forme de calotte de tore, qui peut être mise en prise avec un évidement (31) sensiblement complémentaire par sa forme et par sa fonction, ménagé dans la surface intérieure du perçage traversant du premier tourillon ou de l'élément d'assemblage central (10).

11. Joint universel selon l'une des revendications 2 à 10, caractérisé en ce que le perçage du premier tourillon ou de l'élément d'assemblage central (10) est muni d'une insertion séparée, au moins dans les régions dans lesquelles le deuxième tourillon (12) ou la douille (26) est en appui.

12. Joint universel selon l'une des revendications 4 à 11, caractérisé en ce que chaque tourillon (8) possède un coussinet (24) sur son extrémité qui déborde axialement vers l'extérieur, et en ce qu'il est prévu une chambre destinée à contenir un lubrifiant entre la face frontale de l'extrémité du tourillon et un paroi frontale du coussinet (24).

13. Utilisation d'un joint universel selon l'une des revendications précédentes pour le découplage acoustique et oscillatoire dans une chaîne cinématique, dans un arbre de transmission et/ou dans la région de la ligne de direction d'un véhicule automobile.
